# EUROPEAN PATENT SPECIFICATION

(11) **EP 1 484 225 B1**
(45) Date of publication and mention of the grant of the patent: **31.01.2007**
(21) Application number: 04076481.3
(22) Date of filing: 18.05.2004
(51) Int. Cl.: B60S 3/00

(54) **An installation for washing hand trucks of operating machines, particularly hand trucks of rotogravure machines**
Wascheinrichtung für hand-bewegbarem Transportwagen von Druckmaschinen, insbesondere Transportwagen von Tiefdruck-Rotationsdruckmaschinen
Installation de lavage de chariots manuels pour machines d'impression, en particulier chariots manuels pour machine d'impression rotative en creux

(30) Priority: 29.05.2003 IT TO20030394
(43) Date of publication of application: 08.12.2004
(73) Proprietor: ROTOMEC S.p.A., 15020 San Giorgio Monferrato (IT)
(72) Inventor: Melotti, Renzo, 15030 Sala Monferrato (IT)
(74) Representative: Patrito, Pier Franco

(56) References cited:
- CA-A1- 2 453 869
- US-A- 3 096 775
- US-B1- 6 402 855

## Description

This invention refers to an installation for washing hand trucks of operating machines, and particularly intended for washing hand trucks of rotogravure machines.

According to the known technique, the hand trucks of rotogravure machines and other operating machines, after a pre-established working period, are taken out of the machine and are dismounted in the different component parts thereof. These parts are then washed by hand or in special installations, according to their size and to the their soiled state.

The parts to be washed by hand oblige the worker to make use of personal safety fittings, such as gloves, glasses and masks, and the parts to be washed in a washing installation require to be dismounted from the hand truck, charged in the washing installation and, at the end of the washing cycle, mounted again onto the hand truck. All these operations should necessarily be done by a worker. The consequences are relatively long operation times, noticeable industrial costs and a remarkable labour engagement.

The document US-6,402,855-B1 discloses an installation suitable for washing hand-trucks of operating machines comprising a wash chamber, which has the size and the conformation suitable for receiving and treating a whole truck to be washed, along with all not dismounted parts of the hand-truck itself, and a circulation pump for circulating a washing solvent in the installation.

The document US-3,096,775-A discloses, in an installation for cleaning hand-carts, a number of tubular bored bars for receiving a solvent from a circulation pump and directing the solvent onto the treated hand-cart.

The object of the present invention is to make up, at all or in part, for the drawbacks and limits involved in the known technique now described. More particularly, a first object of the invention is to reduce the time needed for washing the hand trucks and for the connected operations. Another object of the invention is to reduce the labour engagement for washing the hand trucks. Still another object of the invention is to improve the recovery conditions of the solvent used for the washing operations.

The subject of the invention is an installation for washing the hand trucks of operating machines, mainly characterized in that it is constructed and designed in order to receive and to treat in a wash chamber a whole hand truck to be washed, along with all parts of the hand truck itself, not dismounted from the hand truck.

Thanks to this main characteristic, the installation allows to proceed to washing a hand truck without the need of any previous dismounting operation, and without needing any re-mounting operation of parts after the washing operation. Consequently, the operation time is radically reduced with respect to the time needed according to the known technique, and the labour engagement as well as the industrial costs are noticeably reduced.

This invention may find application to the washing of hand trucks purporting to any kind of operating machines, but its prevalent foreseen application is to the washing of hand trucks of rotogravure machines.

Advantageously, in the wash chamber of the installation there are provided a number of tubular bored bars, which receive a wash solvent coming from a circulation pump and direct the same in the form of jets against the hand truck, and especially onto the parts thereof which require to be washed in particular manner.

It is of advantage that said bars form a rotatable whole, displaced in rotation and in translation in an alternate movement, for example by pneumatic cylinders, whereby the bores of the bars direct a wash solvent flow towards the parts to be washed, along one or more directions, in connection with the position of each bar with respect to the hand truck. In the preferred application to the washing of hand trucks of rotogravure machines, it is of advantage that this rotatable whole surrounds the print cylinder mounted on the hand truck.

The installation comprises a lower collecting basin wherein falls the used solvent and wherefrom the solvent is sucked by the circulation pump during a first wash step (pre-wash cycle).

Moreover, the installation comprises a tank of clean solvent, wherefrom the solvent is sucked by the circulation pump during a final wash step.

Preferably the installation comprises a recuperation system for the used solvent, or a system of accumulation thereof for future recuperation, and comprises an empty pump intended for emptying the dirty solvent and the deposited sludge from the collection basin and for directing the same to the recuperation or accumulation system.

Advantageously the installation comprises a fan intended for exhausting the solvent vapors during all working steps and for directing the same to a condensation system, for the recirculation, recuperation, or store in view of a subsequent recuperation of the solvent.

The invention is described in the following with reference to an embodiment intended for washing hand trucks of rotogravure machines, this application being the typical one of the invention, however this embodiment is to be cpnstrued as a non limiting example. It is diagrammatically represented in the accompanying drawings, wherein:

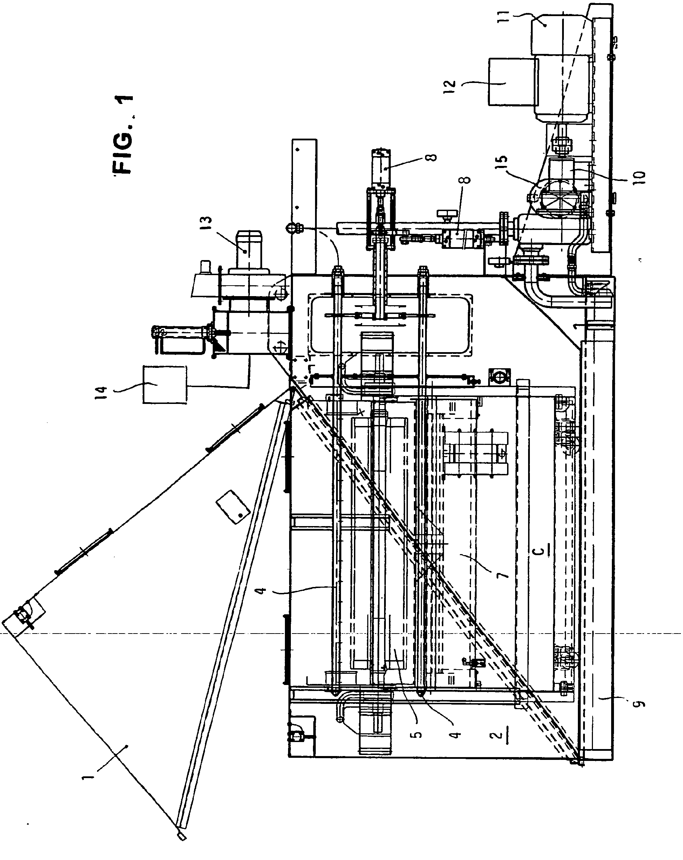

Figure 1 shows on a reduced scale a vertical longitudinal section of the installation according to the invention, in the open condition, and containing a hand truck of rotogravure machine..
Figure 2 shows in plan view a horizontal section of the installation according to Figure 1, this section being taken in correspondence with the axis of the rotatable whole of the tubular bars.

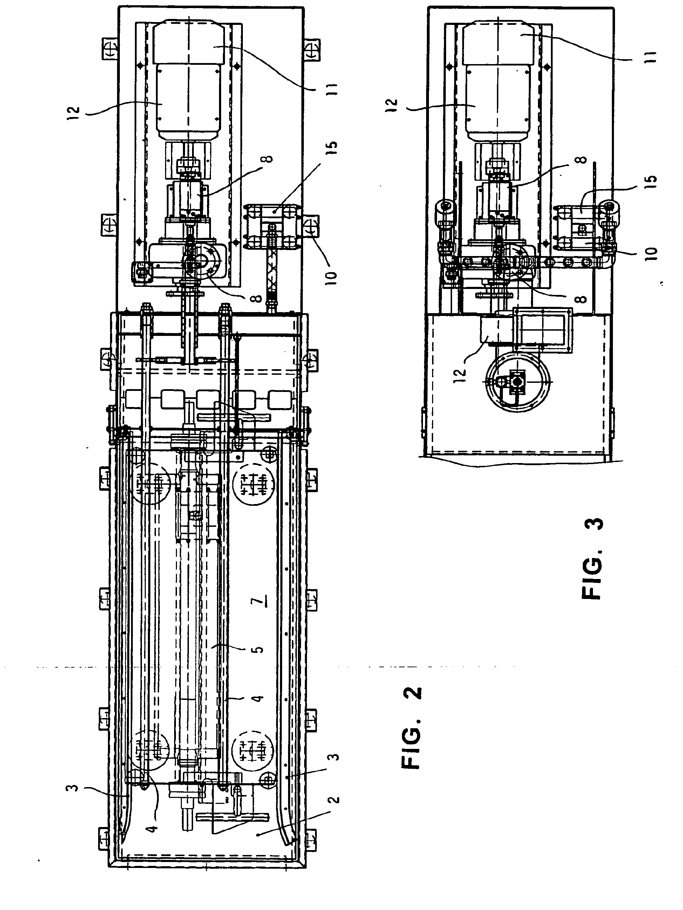

Figure 3 shows in a plan view from outside of a portion of the installation according to Figure 2.

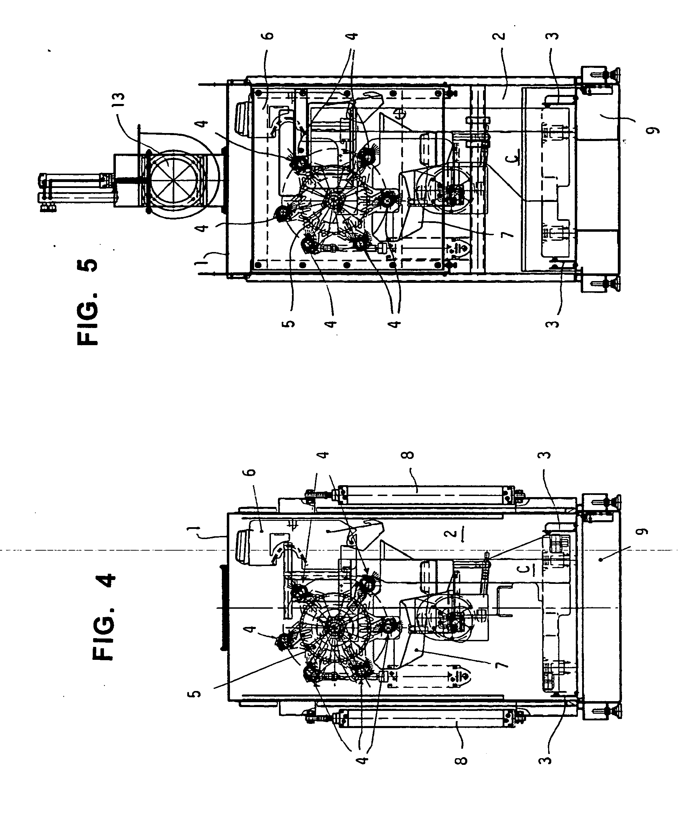

Figures 4 and 5 show two vertical cross sections of the installation according to the foregoing Figures.

The installation comprises a wash chamber 2, whose size and conformation are suitable for receiving a hand truck C. The wash chamber 2 has a front opening through which the hand truck C may be introduced and extracted, and this opening can be closed by a door 1. Inside the wash chamber 2 there is a pair of guide members 3, between which is inserted the incoming hand truck C. This latter is then guided by the guide members 3, during its introduction, until a correct position for being washed.

Inside the wash chamber 2 are installed a number of tubular bored bars 4, which receive a wash solvent from a circulation pump 11 and direct the same in the form of jets onto the hand truck C, and especially onto the parts thereof that are to be particularly washed, namely (in the exemplified case) the print cylinder 5, the shelters 6 and the basin 7 of the hand truck. All the bars 4 form a rotatable whole which, in this case, is suitable for surrounding the print cylinder 5 mounted on the hand truck C, and this whole is displaced in rotation and in translation, with an alternate movement, by two pneumatic cylinders 8. The bores present on the bars 4 direct a wash solvent flow towards the parts to be washed, along one or more directions, in connection with the position of each bar 4 with respect to the hand truck C. The wash solvent thus used falls then in a lower collection basin 9, from which the used solvent can be sucked by the circulation pump 11.

The fact that the bars 4 are disposed around the print cylinder 5, and also between the print cylinder 5 and the basin 7 and between the print cylinder 5 and the shelters 6, allows the solvent jets to attain all regions of the hand truck that need to be washed. The wash efficiency is maximized because the bars are animated by an alternate movement, in rotation and in translation, so that they may ensure a complete cleaning.

A first wash step, constituting a pre-wash cycle, is effected by reusing the already used solvent present in the collection basin 9, recirculated by the circulation pump 11. Although already used, this solvent still has sufficient characteristics for effecting a first washing operation. After this pre-wash cycle is effected a final washing operation, or rinsing, by using clean solvent sucked by the circulation pump 11 from a special tank 12. During the whole wash cycle, and also when the door 1 is opened, a fan 13 is kept active in order to evacuate the vapors.

After a certain number of wash operations, the solvent present in the collection basin 9 becomes excessively dirty, and it needs to be replaced at least in part. To this aim serves an empty pump 10, inserted for emptying the dirty solvent and the deposited sludge from the collection basin 9. The sucked dirty solvent is then directed to a recuperation system, or to a store system 15 for subsequent recuperation. In this manner the recuperation operation takes place on solvent that, having repeatedly operated, contains a lot of substances to be eliminated, and therefore the operation is effected onto the minimal possible quantities of solvent, and it results economical. In effect, the cost of this operation substantially depends on the quantity of treated solvent, and not on the quantity of substances eliminated from the solvent.

Therefore, the operation of the installation according to the invention takes place according to the following cycle:
In a first step, the door 1 is opened and the hand truck C to be washed is introduced in the wash chamber 2.
In a second step, the door 1 is closed and the operation cycle is started by activating the circulation pump 11.
In a third step the used solvent, present in the collection basin 9, is recirculated by pump 11 in order to effect a pre-wash operation.
In a fourth step, clean solvent from tank 12 is circulated by the pump 11 in order to effect a final wash.

Finally, in a fifth step, the circulation of the solvent is stopped, the door 1 is opened and the washed hand truck C is extracted from the wash chamber 2.

During all the stated steps, by means of the fan 13 the solvent vapors are exhausted and directed towards a condensation device 14, for the recirculation, recuperation or accumulation in view of a subsequent recuperation of the solvent.

After a certain number of operation cycles, when the used solvent has attained a preestablished maximum level in the collection basin 9, the emptying of this collection basin 9 is effected by means of the pump 10, towards a recuperation device (which may work, for example, by means of distillation) or towards an accumulation tank 15, in view of a subsequent recuperation.

Thanks to the described features, several advantages may be exploited by the use of an installation according to the invention. Before all, the installation allows to wash a whole hand truck, rather than only some parts thereof, by introducing the hand truck directly in the wash installation. This also allows avoiding the operations of dismounting and then re-mounting the component parts of the hand truck, thus sparing time and labour and, after all, reducing the costs. Also advantageous is the fact of using as process fluid a solvent which can then be recovered by distillation in technically and economically optimal conditions.

Of course, different accessories may be added to the described installation, and various changes and replacements by technically equivalent means may be made, without departing from the scope of protection of the appended claims.

## Claims

1. An installation for washing hand trucks (C) of operating machines, comprising: a wash chamber (2), which has size and conformation suitable for receiving and treating a whole hand truck (C) to be washed, along with all not dismounted parts of the hand truck itself; and a circulation pump (11) for circulating a washing solvent in the installation, **characterized: in that** it
comprises in said wash chamber (2) a number of tubular bored bars (4) for receiving the solvent from said circulation pump (11) and directing the solvent in the form of jets onto the treated hand truck (C), and especially onto the parts thereof which need to be particularly washed; **in that**
said bored bars (4) form a rotatable whole; and **in that** the installation comprises means (8) for displacing said rotatable whole of bored bars (4) in rotation and in translation in an alternate movement, whereby saic bored bars (4) direct a wash solvent flow towards the parts to be washed, along one or more directions, according to the position of each bored bar (4) with respect to the hand truck (C).

2. An installation for washing, as set forth in Claim 1, **characterized in that** said displacing means are pneumatic cylinders (8).

3. An installation for washing, as set forth in Claim 1, **characterized in that** if comprises a bottom collection basin (9) for collecting used solvent falling therein, and from which the used solvent is sucked by said circulation pump (11) in a first wash step constituting a pre-wash cycle.

4. An installation for washing, as set forth in Claim 1, **characterized in that** it comprises a tank (12) for clean solvent, from which the solvent is sucked by said circulation pump (11) in a final wash step.

5. An installation for washing, as set forth in Claim 1, which comprises a system (15) for recuperation, or for accumulation in view of future recuperation, of the used solvent, and comprises an empty pump (10) disposed for emptying from the collection basin (9) the dirty solvent and the formed sludge and for directing the dirty solvent to said recuperation or accumulation system (15).

6. An installation for washing, as set forth in Claim 1, further comprising a fan (13) mounted for exhausting the solvent vapors during all working steps, and a condensation system (14) receiving from said fan (13) the solvent vapors for re-circulation, recuperation or accumulation in view of future recuperation of the solvent.

7. An installation for washing, as set forth in Claim 1, which has the size and the conformations suitable for receiving a hand truck (C) of a rotogravure machine which includes a print cylinder (5) mounted thereon.

## Patentansprüche

1. Waschanlage für Handwagen (C) von Arbeitsmaschinen, mit einer Waschkammer (2), deren Abmessungen und Form zur Aufnahme und zur Behandlung eines ganzen zu waschenden Wagen (C) mit sämtlichen nicht abgenommenen Teilen des Wagens selbst geeignet sind, und mit einer Umwälzpumpe (11) zum Umwälzen eines Waschlösungsmittels in der Anlage, **dadurch gekennzeichnet, daß** in der Waschkammer (2) mehrere gelochte Rohrstangen (4) angeordnet sind, die zur Aufnahme des von der Umwälzpumpe (11) kommenden Lösungmittels und zum Leiten von Lösungsmittelstrahlen auf den gerade behandelten Wagen (C), speziell auf die Wagenteile die besonders gut gewaschen werden sollen, dienen, dass die gelochten Stangen (4) eine drehbare Gruppe bilden, und dass die Anlage Mittel (8) aufweist, um die drehbare Gruppe der gelochten Stangen (4) in eine drehende und in eine geradlinige Bewegung abwechselnd anzutreiben, wobei die gelochten Stangen (4) je nach der Lage, in der sich die jeweilige gelochte Stange (4) zum Wagen (C) befindet, einen Lösungsmittelstrom in eine oder mehrere Richtungen gegen die zu waschenden Teile leiten.

2. Waschanlage nach Anspruch 1, **dadurch gekennzeichnet, daß** es sich bei den Antriebsmitteln um Druckluftzylinder (8) handelt.

3. Waschanlage nach Anspruch 1, **dadurch gekennzeichnet, daß** eine untere Auffangwanne (9) zum Auffangen des darin fallenden gebrauchten Lösungsmittels vorgesehen ist, und daß das gebrauchte Lösungsmittel von der Umwälzpumpe (11) in einem ersten, die Vorwaschstufe darstellenden Vorgang, angesaugt wird.

4. Waschanlage nach Anspruch 1, **dadurch gekennzeichnet, daß** ein Behälter (12) für das saubere Lösungsmittel vorgesehen ist, aus welchem in einer Endstufe des Waschvorganges das Lösungsmittel von der Umwälzpumpe (11) angesaugt wird.

5. Waschanlage nach Anspruch 1, **dadurch gekennzeichnet, daß** ein System (15) zum Rückgewinnen des gebrauchten Lösungsmittels oder zum Speichern desselben für eine künftige Rückgewinnung vorgesehen ist, das eine Entleerungspumpe (10) aufweist, um das schmutzige Lösungsmittel und die entsprechenden Ablagerungen aus der Auffwangwanne (9) zu entfernen und das schmutzige Lösungsmittel zum Rückgewinnungs- bzw. Speicherungssystem (15) zu führen.

6. Waschanlage nach Anspruch 1, die ausserdem einen Lüfter (13) zur Abfuhr der Lösungsmitteldämpfe während aller Arbeitsstufen und ein Kondensationssystem (14) aufweist, dem die Lösungsmitteldämpfe vom Lüfter (13) zwecks Rückführung, Rückgewinnung oder Speicherung für eine künftige Rückgewinnung des Lösungsmittels zugeführt werden.

7. Waschanlage nach Anspruch 1, deren Abmessungen und Form zur Aufnahme eines Wagens (C) samt darauf gelagertem Druckzylinder einer Tiefdruckmaschine geeignet sind.

## Revendications

1. Installation pour laver des chariots de service (C) de machines opératrices, comportant: une chambre de lavage (2), laquelle a des dimensions et une conformation adaptées pour recevoir et traiter tout entier un chariot de service (C) qui doit être lavé, avec toutes les parties non démontées de ce chariot; et une pompe de circulation (11) pour faire circuler dans l'installation un solvant de lavage; **caractérisée en ce: qu'**elle comprend dans ladite chambre de lavage (2) nombre de barres tubulaires trouées (4) pour recevoir le solvant de ladite pompe de circulation (11) et diriger le solvant sous forme de jets sur le chariot de service (C) à laver, et notamment sur ses parties qui demandent d'être lavées en particulier; que lesdites barres trouées (4) forment un ensemble rotatif; et que l'installation comprend des moyens (8) pour déplacer ledit ensemble de barres trouées (4) en rotation et en translation dans un mouvement alternatif; de sorte que lesdites barres trouées (4) dirigent un flux de solvant de lavage contre les parties à laver suivant une ou plusieurs directions, selon la position de chaque barre trouée (4) par rapport au chariot de service (C).

2. Installation de lavage suivant la revendication 1, **caractérisée en ce que** lesdits moyens de déplacement sont des cylindres pneumatiques (8).

3. Installation de lavage suivant la revendication 1, **caractérisée en ce qu'**elle comprend un bassin de réception (9) inférieur pour recevoir le solvant usagé qui tombe dans le bassin, et dont le solvant est aspiré par ladite pompe de circulation (11) pendant une première phase de lavage, constituant un cycle de prélavage.

4. Installation de lavage suivant la revendication 1, **caractérisée en ce qu'**elle comprend un réservoir (12) pour le solvant propre, ce solvant étant aspiré du réservoir par ladite pompe de circulation (11) pendant une phase finale de lavage.

5. Installation de lavage suivant la revendication 1, comportant un système de récupération (15) pour récupérer, ou bien pour accumuler en vue de le récupérer à l'avenir, le solvant usagé, et comprenant une pompe de vidange (10) disposée pour vider du bassin de réception (9) le solvant sale et les dépôts formés et diriger le solvant sale audit système (15) de récupération ou d'accumulation.

6. Installation de lavage suivant la revendication 1, comprenant également un ventilateur (13) disposé pour décharger les vapeurs du solvant pendant toutes les phases du travail, et un système de condensation (14) qui reçoit dudit ventilateur (13) les vapeur du solvant pour les circuler de nouveau, les récupérer ou les accumuler en vue de récupérer à l'avenir le solvant.

7. Installation de lavage suivant la revendication 1, laquelle a les dimensions et la conformation adaptées pour recevoir un chariot de service (C) d'une machine pour l'impression en rotogravure comportant un cylindre d'impression (5) monté sur ce chariot.
